# EUROPEAN PATENT SPECIFICATION

(11) **EP 1 867 234 B1**
(45) Date of publication and mention of the grant of the patent: **02.06.2010**
(21) Application number: 06012031.8
(22) Date of filing: 12.06.2006
(51) Int. Cl.: A23C 9/156, A23C 9/154

(54) **Shelf-stable milk concentrates for preparing acidified milk based beverages**
Lagerstabile Milchkonzentrate zum Herstellung von Sauermilchgetränken
Concentrés laitières à longue durée de conservation pour la préparation des boissons à base de lait acidifié

(43) Date of publication of application: 19.12.2007
(73) Proprietor: Nestec S.A., 1800 Vevey (CH)
(72) Inventor: Saggin, Raffaella, 1475 Montbrelloz (CH)
(74) Representative: Chautard, Cécile

(56) References cited:
- EP-A- 0 385 051
- EP-A- 0 491 623
- EP-A1- 1 206 909
- EP-A1- 1 224 868
- EP-A1- 1 250 845
- WO-A-96/29880
- WO-A-02/058479
- WO-A-2005/099468
- US-A- 3 996 391
- US-B1- 6 171 633
- AMICE-QUEMENEUR N ET AL: "INFLUENCE OF THE ACIDIFICATION PROCESS ON THE COLLOIDAL STABILITY OF ACIDIC MILK DRINKS PREPARED FROM RECONSTITUTED NONFAT DRY MILK" JOURNAL OF DAIRY SCIENCE, AMERICAN DAIRY SCIENCE ASSOCIATION, SAVOY, IL, US, vol. 78, no. 12, 1 December 1995 (1995-12-01), pages 2683-2690, XP000580306 ISSN: 0022-0302

## Description

### Filed of the Invention

The present invention relates to beverages, more precisely to shelf-stable base compositions useful for the preparation of acidified milk based beverages, especially by means of beverage dispensing machines.

### Background of the Invention

Acidified milk beverages are very popular today as they offer simultaneously sweetness and freshness to consumers. These beverages further provide well known milk nutrients like proteins or minerals and, when acidity is achieved by means of fruits juices, the latter further bring flavours or vitamins in addition to the mere acidifying effect.

Most of the acidified milk based beverages are available today as "ready-to-drink" beverages, which require storage at refrigerated conditions and, consequently, which have a limited shelf life. Several attempts have been made in the past to increase stability and storage period of said "ready-to-drink" beverages, e.g. by controlling pH with suitable stabilizers, increasing sugar content or removal of undesired components like certain milk or juice electrolytes (see e.g. US 4,676,988).

US patent 3,800,052 discloses the preparation of a sour, "ready-to-drink" milk beverage having a good whiteness and stability made by adding acid to skim milk to bring the pH of the beverage within the range of 3.5 to 3.7. Acid is added to skim milk and water in predetermined proportions, then sugar and the whole is subject to moderate heating (around 70° C), refined and flavoured if necessary and eventually bottled as is for storage or for direct consumption.

US patent 4,194,019 describes a method for preparing an acidified milk beverage which has milk protein stably dispersed therein and which is "ready-to-drink" without dilution, when subjecting an acidified skimmed milk having a milk solid-not-fat (SNF) content of 0.5 to 3.5 weight % and a pH value of 3.0 to 3.9 to heat treatment at ultra-high temperature. Acidic pH is due to lactic fermentation and addition of sugar is optional.

US patent 4,192,901 eventually discloses a method for manufacturing a concentrate defined as "milk-containing acid syrup" which is further used for preparing beverages by dilution with water. In this case, the inventors have addressed a specific issue, i.e. the stabilization of milk proteins by monitoring the casein / sugar ratio and subsequently subjecting the acidified milk-sugar mixture to ultra-high temperature heating: inventors have assumed that during said ultra-high temperature heat treatment, casein undergoes some form of reaction with sugar and, hydrophilic property of the casein is significantly enhanced.

Beverage dispensing machines or visual bowls are also quite popular in modem communities so they are frequently used for dispensing various kinds of beverages in cans or even as freshly prepared fruits juices or similar beverages. When refrigerated conditions like those which should apply to "ready-to-drink" milk based beverages are necessary, this is leading to use complex and expensive techniques or machines. Further, when working with milk based beverages hygiene is a critical factor.

An approach would be to allow preparation of such acidified milk based beverages immediately before consumption, for instance by storing separately sensitive or non compatible components like e.g. milk and acid or fruit juice and then mix them on demand. This way proved in fact unduly complex and expensive and, also, not suitable for use in conventional beverage dispensing machines.

An other way to by-pass the above difficulties or drawbacks would be using stable concentrated base compositions which would simply be diluted with water on demand, i.e. just before consumption. The art, unfortunately, does not provide today any appropriate solution to the skilled artisan.

The present invention offers an innovative and quite efficient solution to the skilled artisan while providing him a storable, shelf-stable, concentrated base composition which already comprises all the ingredients necessary for preparing an attractive, acidified milk based beverage by mere dilution with water, namely by dilution in a beverage dispensing or vending machine.

Further features or advantages of the present invention shall appear in the specification here below.

### Summary of the Invention

The invention refers to a method as in claim 1.

The invention also refers to method as in claim 2.

The invention, eventually, refers to a method for preparing acidified milk based beverages by dilution of the relevant base composition with an appropriate amount of water and to the beverages so afforded as well.

### Detailed description of the Invention

One of the main characteristics of the invention consists in a well adjusted balance of selected ingredients and their proportions in the base composition, more precisely the milk proteins, a first class of carbohydrates such as sugars or sugar substitutes acting as sweeteners, a second class of carbohydrates acting as stabilizers like gums, pectins or the like acting as stabilizers and acid components. This adjusted balance provides the conditions necessary for stabilizing the base composition and the "ready-to-drink" beverage as well.

The use of this base composition represents another important feature of this invention. This shelf-stable milk base is designed for application in beverage dispensers such as e.g. visual bowls and juice dispensers. In both cases, the milk base offers convenience, ease of handling over ready to drink beverages and less hygiene concerns. For machine hygiene safety, the pH of the concentrate base composition and reconstituted beverage is designed to stay below 4.2.

The specific heat treatment of selected ingredients like milk proteins represents another feature of the invention as it is leading to denaturation of milk proteins to such an extent that they remain stable when subjected to subsequent treatments like acidifying, homogenising, pasteurising or the like and filling. Surprisingly, the stability of the base composition so achieved is further reflected in the "ready-to-drink" acidified milk base beverages, which are prepared by mere dilution with an appropriate amount of water.

According to the invention the base composition comprises from about 2.0 to about 10 weight %, preferably from about 3.6 to about 6.0 weight % of denaturized milk protein. Within the frame of the invention, proportions of milk proteins of are preferably expressed when referring to "solid-not-fat" or "SNF" milk components although simple weight percent may also be used to that purpose. In such a case 2.0 to 10 weight % (SNF) would be equivalent to 0.7 to 3.6 g of milk proteins in 100 grams of base composition. Weight percent are expressed as referring to the total weight of the base composition, i.e. the concentrate.

Suitable sources of milk proteins subjected to denaturizing within the frame of this invention are conveniently selected form fresh and powder whole or semi skimmed or fully skimmed milk. Sodium caseinate, calcium caseinate, milk protein isolates, milk protein concentrates or whey proteins can also be used.

According to the invention the milk proteins have been denaturized by heat treatment. Said treatment is generally performed by subjecting a source of milk proteins at temperatures comprised between about 80 to about 120° C, over a period of about 1 to 20 minutes depending on the manufacturing capabilities, preferably from 110 to 120° C to a period of 2 to 5 minutes. The selected temperature and time conditions need to be addressed to achieve a degree of denaturation of at least 75%.

The said heat treatment can be performed either in the presence of carbohydrates such as those mentioned here below, or not.

Carbohydrates are also key ingredients within the frame of the present invention; they comprise two groups each of them having a specific role to play:
- a first group of carbohydrates consisting of sugars which act, mainly, as sweeteners in the "ready-to-drink" beverage. The term sugars is intended to cover ingredients such as fructose, glucose, maltose, sucrose, lactose, dextrose, high fructose corn syrup or sugar substitutes like e.g. sorbitol, mannitol, xylitol. These carbohydrates also offer the advantage of reducing the water activity of the base composition and consequently, further reducing the risk of contamination from bacteria, yeasts or moulds;
- a second group of carbohydrates comprises polysaccharides acting as stabilizers in both the base composition and the acidified milk base "ready-to-drink" beverage. Such polysaccharides are preferably selected among gums, pectins or pectin derivatives, cellulose derivatives like sodium carboxymethylcellulose, carrageenan or carrageenan derivatives or mixtures of same. One of their main functions consists in controlling the viscosity and the stability of the base composition, especially when the latter is designed for beverage dispensing or vending machines.

Proportions of carbohydrate base sweeteners, when referred to within the frame of the invention, are preferably expressed as "sugar equivalents" although simple weight percent may also be used to that purpose. The terms "sugar equivalents" within the frame of this invention, are meant to qualify ingredients such as non-carbohydrate based, artificial, sweeteners that can replace sucrose. In terms of concentration by weight, for example a milk base containing 40% wt sucrose is equivalent in terms of sweetness to a milk base containing approximately 0.2% wt of aspartame.

Non-carbohydrate based sweeteners like e.g. Splenda®, Acesulfame K®, aspartame or Stevia® are conveniently used within the frame of the present invention.

Sugar equivalent levels are usually comprised between about 15 to about 80 weight %, preferably between about 30 and 60 wt% and most preferably between 40 and 55%.

It has been observed that, by setting the level of sucrose between 40 and 55 weight %, good stability of the base composition could be achieved over a period running up to 12 months at 20°C: the term "shelf-stable" or "storable" used throughout the current specification qualifies these conditions, although shorter storage periods or lower storage temperatures may be contemplated. No serum separation or precipitates were observed in the said base composition. After dilution with water, a "ready-to-drink" beverage was achieved which remained quite stable over 1 week of storage at refrigerated conditions.

When the level of sucrose was set in the range of 30 to 45%, good stability of the corresponding base composition was also achieved over a period running up to 6 months at ambient conditions; minor serum separation but with some sedimentation, however, have been observed in the base composition but this effect did not prevent convenient dilution of the said base with water and no specific negative effect was noticed in the "ready-to-drink" acidified beverage.

Polysaccharides stabilizers are crucial for achieving the desired viscosity and density and best results have been achieved in terms of viscosity range between 15 to 100 mPa.s.

A very important feature of the invention lies in selecting the most adequate polysaccharide to be used as stabilizer. It has been surprisingly observed, however, that a level and type of stabilizer that allowed having a stable base composition did not necessarily provide a stable "ready-to-drink" beverage after dilution with water.

Therefore the goal of this invention is to provide stability for both the base composition and the final beverage and, furthermore, to select a stabilizer that does not increase the viscosity of the said base too much and that, at the same time, provides an acceptable mouth feel in the final beverage. Further, the amount of stabilizer used is dependent on the amount of milk proteins in the base; within the frame of this invention, the most suitable proportions of the carbohydrate based stabilizers (or polysaccharides) are comprised between about 0.35 to about.1.5 weight %, preferably from about 0.50 to about 1.00 weight %.

Eventually, the choice of the stabilizer is also directed by the pH of the base composition, as the selected stabilizer needs to remain fairly active and stable at pH range below 4, preferably from 3.0 to about 3.8.during the whole processing and during storage over prolonged periods.

Among the various polysaccharides mentioned here above, i.e. gums, pectin or pectin derivatives, carrageenan or carrageenan derivatives or mixtures of same and sodium carboxymethylcellulose represents preferred stabilizers. When preparing a base composition having e.g. a SNF content of 3.6 weight % and a sugar equivalent concentration from 40 to 70 weight %, concentrations of high methyl ester pectin of about 0.4 and 0.7 weight % provide fairly stable base compositions; however, when the said base is diluted with water, solid particles tend to settle at the bottom of the container thus giving a "ready-to-drink beverage having an in-cup stability of max. 6 hours.

Best performances have been achieved by means of using high methyl ester pectin concentration ranging from 0.7 to 1 weight % and both the base composition and the final, "ready-to-drink" beverages exhibit the required stability and mouth feel.

Other polysaccharides such as acacia gum can be used at levels between 0.5 to 1 weight percent, proteins do not coagulate after acidification and a homogenous product was obtained.

Pectin or pectin derivatives like that mentioned above can also be combined with other hydrocolloids such as K-carrageenan, sodium carboxymethylcellulose and acacia gum: satisfying results have been obtained with both variants.

Fat can also be present in the mixture subject to heat treatment mentioned here above; by fat it is meant milk fat coming from whole or semi skimmed milk used as source of proteins or, added fat like animal or vegetable fat, when fully skimmed milk is used as source of proteins. Animal fat may comprises e.g. butter oil or gee whereas vegetal fat may comprise e.g. palm kernel, coconut, sunflower or soil oil.

Usually, fresh milk or milk powder is blended at 50°C with water, emulsifier, sugar and melted fat if ever. Some of the sugar is used to dissolve the hydrocolloid (stabilizer) in hot water (70-80°C) at high speed. The hydrocolloid solution is then added to the milk base and the mixture is heat treated as mentioned here above. After heat treatment, the milk and sugar concentrate is homogenized and cooled down to e.g. 4° C.

It has been observed that when working with "milk powder high heat", the pre heat treatment could be reduced to 85°C for a few seconds before cooling to 4°C.

According to the invention, dilution of the base composition with an appropriate amount of water refers to diluting one part of said base composition with 2 to 7 parts or water, e.g. in a beverage dispensing machine. Dilution of the concentrate leads to a product with pH lower than 4.2, with a sugar content of 5-10 g/100ml and milk protein content of 0.01 to 1.8 g/100ml.

According to the invention the mixture once subjected to the heat treatment leading to denaturation of the milk proteins is then cooled to temperature below 10°C and subsequently brought to the convenient pH range; said pH range is a further key feature of the invention. Usually, from a mere stability point of view it is recommended to decrease the pH of the concentrate base composition to below 3.7 in order to obtain a stable isoelectric point of the milk proteins. However, such a low pH is not recommended for the consumption of the final, "ready-to-drink" beverage due to taste issues and most of the acidified beverages are usually consumed at a pH range of 4.0 to 4.4.

Thanks to the present invention this dilemma is conveniently solved by means of preparing a base composition the pH range of which can be lowered to an optimal level for the milk proteins, i.e. a pH of about 3.0 to about 3.5, without affecting the said milk proteins and by diluting it subsequently with the appropriate amount of water and so bringing the final, i.e. "ready-to-drink", beverage to pH around isoelectric point of the milk proteins.

Acidifying agents usable within the frame on the invention comprise edible organic acids such as e.g. citric, malic, tartaric or lactic acid. The selected acids are mixed with water in the ratio of about 30:70 and used to acidify the heated mixture of sugars, stabilizer, milk proteins and fat. Acidification is generally performed at 4°C and by adding the above mixture to the acid solution. This type of acidification is preferred because the milk proteins pass quickly over the isoelectric point around 4.6 and then stay in a pH range of below 4.

Acidification can also be performed by means of fruit juices/concentrates like apple, pear, lemon juice, orange juices, kiwi juice or exotic fruit juices to which acid content has been adjusted accordingly. When doing so the acidification further brings selected flavor components or vitamins. Of course artificial flavor components or minerals or micronutrients can also be added to the whole mixture.

Flavors and colorants are usually added to the mixture before final heat treatment, e.g. pasteurization. Nutrients like vitamins, minerals (Ca⁺⁺ and Mg⁺⁺) etc. can be added at this stage without flavor and insolubility issues. In all cases, the dosage of these ingredients must be calculated based on the dilution factor to achieve the ready to drink beverages.

The base composition is heat treated to e.g. 100° C for 10 sec using either direct or indirect method, then aseptically homogenized, cooled to 30° C and eventually poured into suitable containers aseptically, or by clean or hot filling.

The following examples shall only illustrate some of the embodiments of the invention.

### Example 1

40g sucrose and 45 g of partially skimmed milk (SNF 2.40 %) were mixed at 50°C with added hydrated solution of stabilizers such as K-carrageenan and pectin. The solution was heat treated for 2 minutes at 120° C to denaturize the proteins, then homogenized and cooled down to 4° C.

The pH of the solution was quickly adjusted to 3.5 with agitation by addition of 30 % citric acid solution. Colours and flavours are added at this stage. The acidified product was mixed for 30 minutes and then pasteurized and poured aseptically into storage containers.

Such a product will be consumed after dilution of 1 part of concentrate with 4 parts of water giving acidified milk based beverage having a final pH of 4.0.

### Example 2

20g sugar and 45 g of partially skimmed milk (SNF 2.40 %) were mixed at 50°C with added hydrated solution of stabilizers such as K-carrageenan and pectin. To increase the sweetness level, 0.02 g of sucralose from Splenda® was added to the mixture. The solution was heat treated for 1 minute at 100° C, then homogenized and cooled down to 4° C.

The pH of the solution was quickly adjusted to 3.5 with agitation by addition of 30 % citric acid solution. Colours and flavours are added at this stage. The acidified product was mixed for 30 minutes and then sterilized and poured aseptically into storage containers.

A "ready-to-drink" milk based beverage having a pH of 4.0 has been obtained by dilution of 1 part of the base composition with 4 parts of water.

### Example 3

46g sugar and 33.4g of fresh whole milk and 1.5g of skimmed milk powder (tot. SNF 4.40 %) were mixed at 50° C with added hydrated solution of stabilizers such as K-carrageenan and pectin. The solution was heat-treated, then homogenized and cooled down to 20° C.

The pH of the solution quickly adjusted to 3.3 with agitation by addition of 30% citric acid solution. Colours and flavours are added at this stage. The acidified product was mixed for 30 minutes, sterilized and poured aseptically into storage containers.

A "ready-to-drink" acidified milk based beverage is prepared by dilution of 1 part of base composition with 5 parts of water leading to final pH of 4.0.

### Example 4

28g sugar and 36.2 g of fresh whole milk, 2 g of "milk powder high heat" (tot. SNF 6.00 %) and 0.01 g of Splenda® sweetener were mixed at 50° C with added hydrated solution of stabilizers such as K-carrageenan 0.01 % and pectin 0.7%. The solution was heat treated for 2 minutes at 118° C to denature the proteins, then homogenized and cooled down to 20° C.

The pH of the solution was quickly adjusted to 3.2 with agitation by addition of 30% malic acid solution. Colours (0.1g) and flavours (0.35 g) are added at this stage. The concentration of colours and flavours is 7 times higher than in a corresponding "ready-to-drink" beverage. The acidified product was mixed for 30 minutes, sterilized and aseptically filled.

A "ready-to-drink" acidified milk based beverage is prepared by dilution of 1 part of base composition with 6 parts of water (pH 4.1).

### Example 5

0.01 g of Splenda® sweetener, 6.1 g of "milk powder high heat" (SNF 6.00 %) were mixed at ambient conditions with added hydrated solution of stabilizers such as pectin and carboxymethylcellulose The solution was heat treated for few seconds at 85°C and then cooled down to 4° C.

The pH of the solution was quickly adjusted to 3.2 with agitation by addition of 30% malic acid solution. Colours (0.1g) and flavours (0.35 g) are added at this stage. The acidified product was mixed for 30 minutes, pasteurised and then poured in a clean manner into storage containers.

A "ready-to-drink" acidified milk based beverage is prepared by dilution of 1 part of base composition with 6 parts of water (pH 4.1).

## Claims

1. A method for preparing a shelf-stable base composition for preparing acidified milk based beverages comprising :
a. from about 2 to about 10 weight % of denaturized milk proteins expressed as solid-not-fat (SNF) milk components,
b. from about 15 to about 80 weight %, expressed as sugar equivalents, of a carbohydrate based or non carbohydrate based sweetener,
c. from about 0.35 to about 1.50 weight % of a carbohydrate based stabilizer, and
d. an acidifying agent present in amounts necessary for achieving a pH of about 3.0 to about 3.8 of the said base composition,
, which comprises:
- heating a source of milk proteins at about 80 to about 120°C over a period of about 1 to about 20 minutes to achieve denaturizing of the said milk proteins,
- mixing the source of denaturized milk proteins with a carbohydrate based or non carbohydrate based sweetener and with a carbohydrate based stabilizer,
- bringing the above mixture to a pH of about 3.0 to about 3.8 while mixing it with an acidifying agent, and
- sterilizing or pasteurising the above acidified mixture and subsequently pouring it into containers.

2. A method for preparing a shelf-stable base composition for preparing acidified milk based beverages comprising :
a. from about 2 to about 10 weight % of denaturized milk proteins expressed as solid-not-fat (SNF) milk components,
b. from about 15 to about 80 weight %, expressed as sugar equivalents, of a carbohydrate based or non carbohydrate based sweetener,
c. from about 0.35 to about 1.50 weight % of a carbohydrate based stabilizer, and
d. an acidifying agent present in amounts necessary for achieving a pH of about 3.0 to about 3.8 of the said base composition,
, which comprises:
- heating a source of milk proteins at about 80 to about 120° C over a period of about 1 to about 20 minutes in presence of a carbohydrate based or non carbohydrate based sweetener and of a carbohydrate based stabilizer,
- cooling down the heat treated mixture and bringing it to a pH of about 3.0 to about 3.8 while mixing it with an acidifying agent, and
- sterilizing or pasteurising the above acidified mixture and subsequently pouring it into containers.

3. The method according to claims 1 or 2, wherein the carbohydrate-based sweetener is a mono- or polysaccharide selected from the group consisting of sugars, sugar substitutes, sugar derivatives and mixtures of same.

4. The method according to claims 1 or 2, wherein the carbohydrate-based stabilizer is a polysaccharide selected from the group consisting of gums, pectins and pectin derivatives, cellulose derivatives, carrageenan and carrageenan derivatives and mixtures of same.

5. The method according to anyone of claims 1 to 4, wherein the acidifying agent is an edible acid or a source of edible acid, e.g. fruit juice.

6. The method according to anyone of claims 1 to 5, wherein the mixture subject to heat treatment further comprises fat or a source of fat.

7. The method according to anyone claims 1 to 6, wherein flavours, colorants or micronutrients are added to the acidified mixture prior to sterilisation or pasteurisation.

## Patentansprüche

1. Verfahren zur Herstellung einer lagerstabilen Basiszusammensetzung zur Herstellung von gesäuerten Getränken auf Milchbasis, die umfassen:
a) etwa 2 bis etwa 10 Gewichtsprozent denaturierte Milchproteine, ausgedrückt als feste-fettfreie (SNF) Milchbestandteile,
b) etwa 15 bis etwa 80 Gewichtsprozent, ausgedrückt als Zuckeräquivalente, eines Süßungsmittels auf Kohlenhydratbasis oder auf Nicht-Kohlenhydratbasis,
c) etwa 0,35 bis etwa 1,50 Gewichtsprozent eines Stabilisators auf Kohlenhydratbasis und
d) ein Säuerungsmittel, das in Mengen vorhanden ist, die notwendig sind, um einen pH von etwa 3,0 bis etwa 3,8 der Basiszusammensetzung zu erreichen, das aufweist:
- Erhitzen einer Quelle von Milchproteinen bei etwa 80 bis etwa 120 °C über einen Zeitraum von etwa 1 bis etwa 20 Minuten, um die Denaturierung dieser Milchproteine zu erreichen,
- Vermischen der Quelle denaturierter Milchproteinen mit einem Süßungsmittel auf Kohlenhydratbasis oder Nicht-Kohlenhydratbasis und mit einem Stabilisator auf Kohlenhydratbasis,
- Bringen der obigen Mischung auf einen pH von etwa 3,0 bis etwa 3,8, während diese mit einem Säuerungsmittel vermischt wird und
- Sterilisieren oder Pasteurisieren der obigen gesäuerten Mischung und anschließendes Gießen dieser in Behälter.

2. Verfahren zur Herstellung einer lagerstabilen Basiszusammensetzung zur Herstellung von gesäuerten Getränken auf Milchbasis, die umfassen:
a) etwa 2 bis etwa 10 Gewichtsprozent denaturierte Milchproteine, ausgedrückt als feste-fettfreie (SNF) Milchbestandteile,
b) etwa 15 bis etwa 80 Gewichtsprozent, ausgedrückt als Zuckeräquivalente, eines Süßungsmittels auf Kohlenhydratbasis oder auf Nicht-Kohlenhydratbasis,
c) etwa 0,35 bis etwa 1,50 Gewichtsprozent eines Stabilisators auf Kohlenhydratbasis und
d) ein Säuerungsmittel, das in Mengen vorhanden ist, die notwendig sind, um einen pH von etwa 3,0 bis etwa 3,8 der Basiszusammensetzung zu erreichen, das aufweist:
- Erhitzen einer Quelle von Milchproteinen bei etwa 80 bis etwa 120 °C über einen Zeitraum von etwa 1 bis etwa 20 Minuten in Gegenwart eines Süßungsmittels auf Kohlenhydratbasis oder Nicht-Kohlenhydratbasis und eines Stabilisators auf Kohlenhydratbasis,
- Herunterkühlen der hitzebehandelten Mischung und Bringen derselben auf einen pH von etwa 3,0 bis etwa 3,8, während diese mit einem Säuerungsmittel vermischt wird und
- Sterilisieren oder Pasteurisieren der obigen gesäuerten Mischung und anschließendes Gießen derselben in Behälter.

3. Verfahren nach Anspruch 1 oder 2, worin das Süßungsmittel auf Kohlenhydratbasis ein Mono- oder Polysaccharid ist, das aus der Gruppe gewählt ist, die aus Zuckern, Zuckerersatzstoffen, Zuckerderivaten und Mischungen daraus besteht.

4. Verfahren nach Anspruch 1 oder 2, worin der Stabilisator auf Kohlenhydratbasis ein Polysaccharid ist, das aus der Gruppe gewählt ist, die aus Gummi, Pektinen und Pektinderivaten, Zellulosederivaten, Carrageenan und Carrageenanderviaten und Mischungen daraus besteht.

5. Verfahren nach einem der Ansprüche 1 bis 4, worin das Säuerungsmittel eine essbare Säure oder eine Quelle einer essbaren Säure, zum Beispiel Fruchtsaft, ist.

6. Verfahren nach einem der Ansprüche 1 bis 5, worin die einer Hitzebehandlung unterworfene Mischung weiterhin Fett oder eine Quelle für Fett umfasst.

7. Verfahren nach einem der Ansprüche 1 bis 6, worin Aromastoffe, Farbstoffe oder Mikronährstoffe in die gesäuerte Mischung vor der Sterilisation oder Pasteurisation gegeben werden.

## Revendications

1. Procédé pour la préparation d'une composition de base stable à la conservation pour préparer des boissons à base de lait acidifié, comprenant :
a. environ 2 à environ 10 % en poids de protéines du lait dénaturées, la quantité étant exprimée en constituants du lait du type extrait sec dégraissé du lait (SNF),
b. environ 15 à environ 80 % en poids, la quantité étant exprimée en équivalents de sucre, d'un édulcorant à base de glucide ou non à base de glucide,
c. environ 0,35 à environ 1,50 % en poids d'un stabilisant à base de glucide, et
d. un agent acidifiant présent en les quantités nécessaires pour atteindre un pH d'environ 3,0 à environ 3,8 de ladite composition de base, qui comprend les étapes consistant :
- à chauffer une source de protéines du lait à une température comprise dans l'intervalle d'environ 80 à 120°C pendant une période de temps d'environ 1 à environ 20 minutes pour parvenir à la dénaturation desdites protéines du lait,
- à mélanger la source de protéines du lait dénaturées avec un édulcorant à base de glucide ou non à base de glucide et avec un stabilisant à base de glucide,
- à amener le mélange précité à un pH d'environ 3,0 à environ 3,8 tout en le mélangeant à un agent acidifiant,
- à stériliser ou pasteuriser le mélange acidifié précité et ensuite à le verser dans des récipients.

2. Procédé pour la préparation d'une composition de base stable à la conservation pour préparer des boissons à base de lait acidifié, comprenant :
a. environ 2 à environ 10 % en poids de protéines du lait dénaturées, la quantité étant exprimée en constituants du lait du type extrait sec dégraissé du lait (SNF),
b. environ 15 à environ 80 % en poids, la quantité étant exprimée en équivalents de sucre, d'un édulcorant à base de glucide ou non à base de glucide,
c. environ 0,35 à environ 1,50 % en poids d'un stabilisant à base de glucide, et
d. un agent acidifiant présent en les quantités nécessaires pour atteindre un pH d'environ 3,0 à environ 3,8 de ladite composition de base, qui comprend les étapes consistant :
- à chauffer une source de protéines du lait à une température comprise dans l'intervalle d'environ 80 à environ 120°C pendant une période de temps d'environ 1 à environ 20 minutes en présence d'un édulcorant à base de glucide ou non à base de glucide et d'un stabilisant à base de glucide,
- à refroidir le mélange ayant subi le traitement thermique et à l'amener à un pH d'environ 3,0 à environ 3,8 tout en le mélangeant à un agent acidifiant, et
- à stériliser ou pasteuriser le mélange acidifié précité et ensuite à le verser dans des récipients.

3. Procédé suivant la revendication 1 ou 2, dans lequel ledit édulcorant à base de glucide est un mono- ou polysaccharide choisi dans le groupe consistant en des sucres, des succédanés du sucre, des dérivés de sucre et leurs mélanges.

4. Procédé suivant la revendication 1 ou 2, dans lequel le stabilisant à base de glucide est un polysaccharide choisi dans le groupe consistant en des gommes, des pectines et des dérivés de pectines, des dérivés de cellulose, la carraghénine et des dérivés de carraghénine ainsi que leurs mélanges.

5. Procédé suivant l'une quelconque des revendications 1 à 4, dans lequel l'agent acidifiant est un acide comestible ou une source d'acide comestible, par exemple du jus de fruits.

6. Procédé suivant l'une quelconque des revendications 1 à 5, dans lequel le mélange soumis au traitement thermique comprend en outre une matière grasse ou une source de matière grasse.

7. Procédé suivant l'une quelconque des revendications 1 à 6, dans lequel des arômes, des colorants ou des micronutriments sont ajoutés au mélange acidifié avant stérilisation ou pasteurisation.
